# EUROPÄISCHE PATENTANMELDUNG

(11) **EP 1 510 243 A1**
(43) Veröffentlichungstag der Anmeldung: **02.03.2005**
(21) Anmeldenummer: 04013304.3
(22) Anmeldetag: 05.06.2004
(51) Int. Cl.: B01D 53/04

(54) **Verfahren und Anlage zur Abgasreinigung**

(30) Priorität: 18.08.2003 DE 10338418
(71) Anmelder: Donau Carbon GmbH & Co. KG, 60388 Frankfurt am Main (DE)
(72) Erfinder: Reichert, Bernd, Dipl.-Ing., 61194 Niddatal (DE); Röder, Herbert, Dipl.-Ing., 60599 Frankfurt am Main (DE)
(74) Vertreter: KEIL & SCHAAFHAUSEN

(57) **Zusammenfassung**

Die Erfindung betrifft ein Verfahren und eine Anlage zur Reinigung von Abgasen in Adsorbern (5a, 5b, 5c). Die Adsorber werden zyklisch abwechselnd nach einem Adsorptionsbetrieb in einem Regenerationsbetrieb in einem Desorptionsschritt, in welchem die Adsorber mit einem Austreibmittel beaufschlagt werden, und in einem daran anschließenden Trocknungs- und Kühlschritt betrieben, in welchem die Adsorber mit Abgas beaufschlagt werden. Erfindungsgemäß wird im Regenerationsbetrieb im Desorptionsschritt das Austreibmittel einer dem Adsorber (5a, 5b, 5c) nachgeschalteten ersten Kühlstufe (12) und im Trocknungs- und Kühlschritt das Abgas einer zweiten Kühlstufe (14) zugeführt.

## Beschreibung

Die Erfindung betrifft ein Verfahren zur Reinigung von Abgasen, insbesondere zur Reinigung von Abluft aus Druckereianlagen, die aus einem mit den Abgasen belasteten Bereich abgezogen und zur Abtrennung von Verunreinigungen, wie Lösemitteldämpfen, aus dem Gas einer Gruppe aus wenigstens zwei Adsorbern zugeführt wird. Diese werden derart zyklisch wechselnd einem Regenerationsbetrieb unterzogen, dass sich wenigstens einer der Adsorber in einem Adsorptionsbetrieb befindet, wenn sich wenigstens ein weiterer Adsorber in einem Regenerationsbetrieb befindet. Die Adsorber im Adsorptionsbetrieb werden dabei mit Abgas beaufschlagt, welches nach der Reinigung in den Adsorbern in die Umgebung abgelassen und/oder in den mit Abgasen belasteten Bereich zurückgeführt wird, und die Adsorber im Regenerationsbetrieb werden zunächst in einem Desorptionsschritt, in welchem der wenigstens eine Adsorber von dem Abgasstrom getrennt ist, mit einem Austreibmittel beaufschlagt, welches über eine dem Adsorber nachgeschaltete Kühlstufe abgeführt wird. Im Regenerationsbetrieb werden die Adsorber in einem sich an den Desorptionsschritt anschließenden Trocknungs- und Kühlschritt mit Abgas beaufschlagt, welches in einer dem wenigstens einen Adsorber nachgeschalteten Kühlstufe gekühlt und anschließend dem wenigstens einen Adsorber im Adsorptionsbetrieb zugeführt wird. Weiter betrifft die Erfindung eine Anlage zur Durchführung eines derartigen Verfahrens.

Ein Verfahren der eingangs genannten Art ist aus der DE 29 28 138 C2 bekannt, wobei durch den Trocknungs- und Kühlschritt im Regenerationsbetrieb hauptsächlich eine Vorkühlung des im Desorptionsschritt regenerierten Adsorbers erreicht werden soll. Gleichzeitig erfolgt dabei auch eine zumindest teilweise Trocknung des Adsorbers. Auf diese Weise soll ein Lösemittelpeak in der Abluft, d.h. ein Anstieg der Lösemittelkonzentration in dem in dem Absorber gereinigten Gas vermieden werden. Ein derartiger Lösemittelpeak tritt häufig beim Umschalten aus dem Regenerationsbetrieb in den Absorptionsbetrieb auf, da der Adsorber noch durch das Austreibmittel, bspw. Wasserdampf, besetzt ist, so dass kaum Lösemittel adsorbiert werden kann.

Zur Kühlung und teilweisen Trocknung wird das Gas im Trocknungs- und Kühlschritt bei dem bekannten Verfahren der Kühlstufe zugeführt, mit welcher auch das Austreibmittel im Desorptionsschritt gekühlt wird. Da im Desorptionsschritt das Volumen des Austreibmittels jedoch nur etwa 10 bis 15 % der im Adsorptionsbetrieb anfallenden Abgasmenge auftreten, ist die Kühlung und Trocknung des Abgases im Trocknungs- und Kühlschritt im Regenerationsbetrieb nur begrenzt möglich. Die Kühllufttemperatur und damit die Luftfeuchte in dem Abgas sind bei diesem bekannten Verfahren folglich relativ hoch. Zudem werden in der dem Adsorber nachgeschalteten Kühlstufe häufig Kondensationseinrichtungen verwendet, in denen Rückkühlwasser oder Umgebungsluft (luftgekühlter Kondensator) als Kühlmedium eingesetzt werden. Die Kühlung und Trocknung des Abgases ist dadurch nicht sehr effektiv.

Weiter ist die nur unvollständige Kühlung und Trocknung bei dem bekannten Verfahren nachteilig, da der Adsorber beim Umschalten aus dem Umschalten aus dem Regenerationsbetrieb in den Adsorptionsbetrieb noch mit dem Austreibmittel, bspw. Wasserdampf, beladen ist und eine hohe Temperatur aufweist. Bei diesem Umschalten wird das Abgas so stark befeuchtet, dass es für die Zufuhr zu einer Druckmaschine ungeeignet ist.

In der EP 0 654 295 B1 wird daher vorgeschlagen, dass in einer Anfangsphase des Adsorptionsbetriebs der noch heiße und feuchte Luftstrom aus dem Adsorber einer gesonderten Behandlung zugeführt wird und erst nach dieser Anfangsphase in einer Hauptphase des Adsorptionsbetriebs der den Adsorber verlassende Luftstrom unmittelbar in einen Arbeitsraum zurückgeführt wird. Die gesonderte Behandlung soll darin bestehen, dass zumindest ein Teil des in der Anfangsphase des Adsorptionsbetriebs aus dem Adsorber austretenden Luftstroms in die Umgebung ausgeschleust wird. Die Abluft wird also nicht in einem Umluftbetrieb gefahren, so dass dem Luftstrom eine größere Menge an Frischluft zugeführt werden müssen, die je nach Außentemperatur zu temperieren ist. Dies ist mit einem erheblichen Energieeinsatz verbunden, der bspw. den Betrieb von Druckmaschinen verteuert.

Aus der EP 0 792 183 B1 ist ein Verfahren bekannt, bei welchem die Adsorber zwischen dem Regenerationsbetrieb und dem Adsorptionsbetrieb in einem zeitweise partiellen Adsorberzustand betrieben werden. Hierbei werden die Adsorber jeweils nach Abschluss des Regenerationsbetriebs mit einer geregelt ansteigenden Gasdurchsatzmenge den im Adsorptionsbetrieb laufenden Adsorbern zugeschaltet. Auf diese Weise werden zwar Lösemittelpeaks bzw. ein zu starker Anstieg der Luftfeuchte und/oder der Temperatur vermieden, so dass die Abluft in Umluftbetrieb bspw. zu einer Druckereianlage zurückgeführt werden kann. Allerdings steht der Adsorber nach dem Regenerationsbetrieb durch die nur langsam ansteigende Gasdurchsatzmenge im Adsorptionsbetrieb über einen langen Zeitraum nicht vollständig zur Reinigung von Abgas zur Verfügung. Es ist daher eine hohe Anzahl von Adsorbern vorzuhalten, so dass eine ausreichende Reinigung der Abgase sichergestellt werden kann.

Aufgabe der vorliegenden Erfindung ist es, demgegenüber ein Verfahren der eingangs genannten Art derart weiterzubilden, dass eine effektive und rasche Kühlung und Trocknung der Adsorber nach dem Desorptionsschritt erfolgt, wobei die Abluft immer im Umluftbetrieb geführt werden kann. Weiter soll eine entsprechende Anlage bereitgestellt werden.

Diese Aufgabe wird erfindungsgemäß im Wesentlichen dadurch gelöst, dass im Regenerationsbetrieb im Desorptionsschritt das Austreibmittel einer dem Adsorber nachgeschalteten ersten Kühlstufe und im Trocknungs- und Kühlschritt das Abgas einer zweiten Kühlstufe zugeführt wird. Diese zweite Kühlstufe kann derart ausgelegt sein, dass eine effektive Kühlung und Trocknung des Adsorbers erfolgt, so dass dieser nach einer relativ kurzen Trocknungs- und Kühlzeit in den Adsorptionsbetrieb geschaltet werden kann. Vorzugsweise befinden sich immer ein oder mehrere Adsorber im Adsorptionsbetrieb, während sich maximal ein weiterer Adsorber im Desorptionsschritt oder im Trocknungs- und Kühlschritt des Regenerationsbetriebs befindet. Auf diese Weise steht immer mindestens ein Adsorber zur Reinigung der Abgase zur Verfügung.

Vorzugsweise wird das Abgas in der zweiten Kühlstufe in einem ersten Ausschleuskühler auf unter 50 °C insbesondere etwa 40 °C und in einem zweiten Ausschleuskühler auf unter 25 °C insbesondere etwa 15 °C abgekühlt. Die derart gekühlte und gesättigte Luft wird den Abgasen zugemischt und durch die im Adsorptionsbetrieb befindlichen Adsorber geleitet, wobei der Wassergehalt aufgrund der Wasseradsorptionsfähigkeit der Adsorber weiter reduziert wird. Die aus den Adsorbern austretende Abluft kann dann nach einer Luftkonditionierung bspw. zu Tiefdruckmaschinen zurückgeführt werden, wobei eine nahezu konstante und niedrige absolute Feuchte der Luft erreicht wird. Die Adsorber, bspw. Aktivkohle-Adsorber, fungieren dabei als zusätzlicher Puffer und somit als "Wassergleichrichter".

Nach einer besonders bevorzugten Ausführungsform wird dem Austreibmittel (Desorbat) die Desorbatwärme in der ersten Kühlstufe in einem Wärmetauscher (Desorbatwärmetauscher) durch ein Heiz- oder Kühlmedium entzogen und zur Kaltwassererzeugung genutzt. Vorzugsweise wird das Heiz- oder Kühlmedium vor dieser Nutzung der Desorbatwärme in einem Temperaturgleichrichter auf ein im Wesentlichen konstantes Temperaturniveau zwischen 85 °C und 110 °C gebracht und die Wärmeenergie des Heiz- oder Kühlmediums in einer dem Temperaturgleichrichter nachgeschalteten Kaltwassererzeugungsanlage zur Kühlung eines Kühlmediums eingesetzt. Auf diese Weise ist es möglich, das Kühlmedium zur Kühlung des Abgases in der zweiten Kühlstufe einzusetzen. Die in dem Desorbat enthaltene Wärmeenergie kann folglich zur Erzeugung von Kaltwasser genutzt werden, mit dem das Abgas in der zweiten Kühlstufe effektiv gekühlt werden kann. Die dem Heiz- oder Kühlmedium in dem Temperaturgleichrichter zugeführte Energiemenge ist dabei deutlich kleiner als die zum Betrieb der Kältemaschine erforderliche Energiemenge.

Wenn zwischen dem Wärmetauscher (Desorbatwärmetauscher) der ersten Kühlstufe und der Kaltwassererzeugungsanlage ein Puffersystem zur Speicherung von Wärme zwischengeschaltet ist, kann die diskontinuierlich anfallende Desorbatwärme gespeichert und kontinuierlich an die Kaltwassererzeugungsanlage abgegeben werden. Die Nutzung der in dem Desorbat enthaltenen Wärmeenergie ist dadurch effektiver möglich.

Durch den Temperaturgleichrichter wird die Wärmeenergie des Heiz- oder Kühlmediums kontinuierlich auf einem gleichbleibenden Temperaturniveau gehalten, so dass der Betrieb einer Kältemaschine zur Erzeugung von Kaltwasser wirtschaftlich möglich ist. Der Gesamtenergieverbrauch bei dem erfindungsgemäßen Verfahren zur Reinigung von Abgas kann auf diese Weise deutlich gesenkt werden.

Das Kühlmedium wird in der Kaltwassererzeugungsanlage vorzugsweise auf eine Temperatur von unter 15 °C, insbesondere auf etwa 4 bis 7 °C abgekühlt. Dabei kann der erste Ausschleuskühler der zweiten Kühlstufe mit Rückkühlwasser als Kühlmedium betrieben werden, während der zweite Ausschleuskühler der zweiten Kühlstufe mit Kaltwasser betrieben wird, z.B. unter Nutzung des aus der Desorbatwärme erzeugten Kaltwassers, um das in dem Abgas enthaltene Wasser zu kondensieren und auszuschleusen. Die absolute Luftfeuchtigkeit in dem Abgas wird dadurch so stark reduziert, dass eine Luftrückführung von 100% erreicht werden kann.

Nach einer bevorzugten Ausführungsform der Erfindung ist es vorgesehen, dass das gereinigte Abgas im Wesentlichen vollständig in den Bereich zurückgeführt wird, aus welchem das Abgas vor der Reinigung abgesaugt wird. Dieser Bereich kann bspw. die Einhausung einer Druckmaschiene sein, in welcher die Luft zur Trocknung von bedrucktem Gut eingesetzt wird. Die Anforderungen an die zur Trocknung eingesetzte Luft sind hinsichtlich ihrer Temperatur und Luftfeuchte besonders hoch, so dass bei konstanter Temperatur ein nahezu gleichbleibender Wassergehalt in der Luft sichergestellt werden muss.

Vor der Reinigung des Abgases in einem Adsorber kann das Abgas in einer weiteren Kühlstufe gekühlt werden, so dass Temperaturschwankungen in den Adsorbern, die zu einem unterschiedlichen Reinigungsergebnis führen können, vermieden werden.

Die der Erfindung zugrundeliegende Aufgabe wird weiter mit einer Anlage zur Reinigung von Abgasen gelöst, die ein Leitungssystem, welches einen Bereich, in dem Abgase anfallen, mit wenigstens zwei parallel geschalteten Adsorbern, insbesondere Aktivkohle-Adsorbern, und diese wieder mit dem genannten Bereich verbindet, eine Einrichtung zur abwechselnden Zufuhr eines Austreibmittels zu den Adsorbern und eine den Adsorbern nachgeschaltete erste Kühlstufe aufweist. Erfindungsgemäß ist den Adsorbern dabei eine zweite Kühlstufe nachgeschaltet, welche mit dem Leitungssystem verbindbar ist. Die Anlage weist damit eine erst Kühlstufe auf, um im Desorptionsschritt das Desorbat abzukühlen bzw. zu kondensieren, und eine separate zweite Kühlstufe, welche zur Trocknung und Kühlung der Abgase und Ausschleusung des Wassers in dem Trocknungs- und Kühlschritt ausgelegt ist.

Wenn die erste Kühlstufe einen Desorbatwärmetauscher aufweist, der über einen ersten Kreislauf eines ersten Heiz- oder Kühlmediums mit einem Pufferbehälter verbunden ist, aus welchem über einen zweiten Kreislauf mittels eines zweiten Heiz- oder Kühlmediums Wärmeenergie zur Nutzung abgeführt wird, kann die diskontinuierlich anfallende Wärmeenergie des Desorbats kontinuierlich auf einem näherungsweise konstanten Temperaturniveau genutzt werden. Vorzugsweise sind in dem zweiten Kreislauf ein Temperaturgleichrichter und diesem nachgeschaltet eine Kaltwassererzeugungsanlage vorgesehen, welche in Strömungrichtung vor einem Wärmetauscher oder dgl. zur weiteren Nutzung der Wärmeenergie in dem zweiten Kreislauf angeordnet sind. Der Temperaturgleichrichter bringt das dem Pufferbehälter kontinuierlich entnommene zweite Heiz- oder Kühlmedium auf ein gleichbleibendes Temperaturniveau, so dass der Betrieb einer Kaltwassererzeugungsanlage mit gutem Wirkungsgrad und damit wirtschaftlich möglich ist.

Nach einer bevorzugten Ausführungsform der Erfindung weist die zweite Kühlstufe zwei in Reihe geschaltete Ausschleuskühler auf. Dabei kann die Kaltwassererzeugungsanlage über einen Kühlmittelkreislauf mit der zweiten Kühlstufe verbunden sein. Bspw. wird der erste Ausschleuskühler mit Rückkühlwasser als Kühlmedium betrieben, während der zweite Ausschleuskühler mit Kaltwasser, z.B. unter Nutzung des aus der Desorbatwärme erzeugten Kaltwassers, betrieben wird. Hierdurch ist eine effektive Kühlung und starke Reduzierung der Luftfeuchtigkeit in den Abgasen möglich.

Vorzugsweise ist die erfindungsgemäße Anlage als Abluftfilteranlage einer Druckerei nachgeschaltet. Auf diese Weise kann aus einem Drucksaal mit Lösemittel beladene Luft an den Druckmaschinen abgesaugt und gereinigt werden. Diese Luft kann nach der Reinigung im Umluftbetrieb direkt wieder den Druckmaschinen zur Trocknung zugeführt werden.

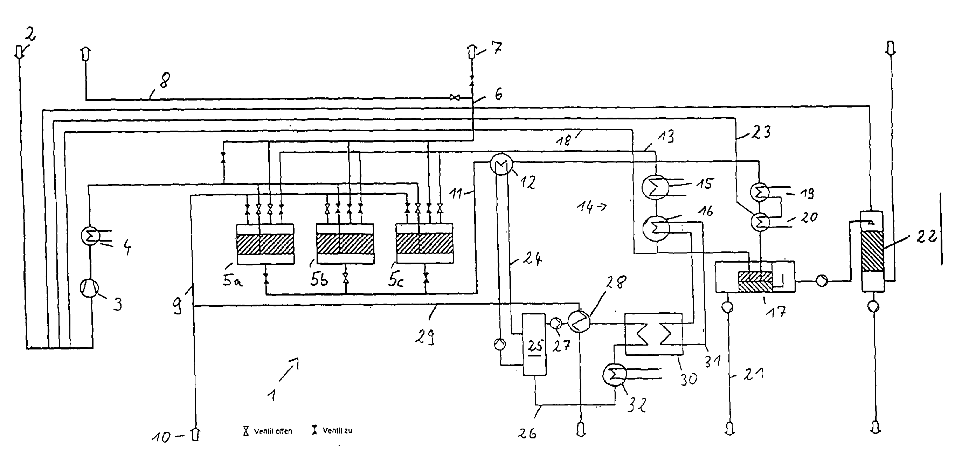

Im Folgenden wird die Erfindung anhand eines Ausführungsbeispiels und unter Bezugnahme auf die beigefügte Zeichnung erläutert.

Die einzige Figur zeigt in schematischer Darstellung ein Verfahrensfließbild einer erfindungsgemäßen Abluftreinigungsanlage.

Die in der Figur dargestellte Abluftreinigungsanlage 1 weist eine Abluftansaugung 2 auf, bei der mit Lösemittel beladene Abgase, die bspw. in Tiefdruckereien anfallen, abgesaugt und durch ein Gebläse 3 verdichtet werden. In einem dem Gebläse 3 nachgeschalteten Kühler 4 können die Abgase abgekühlt werden. Dem Gebläse 3 sind mehrere Aktivkohle enthaltende Adsorber 5a, 5b und 5c parallel nachgeschaltet. Der Adsorber 5a arbeitet in der Darstellung der Figur im Adsorptionsbetrieb, in welchem die Lösemittel aus dem Abluftstrom adsorbiert werden. Der derart gereinigte Abgasstrom kann über eine Leitung 6 einem Abluftkamin 7 zugeführt werden, aus welchem die gereinigte Luft in die Atmosphäre abgelassen wird, oder vorzugsweise über eine Leitung 8 bspw. in die Einhausung einer Druckmaschiene zurückgeführt werden. Der Adsorber 5a wird durch die Adsorption der Lösemittel beladen, so dass nach einer bestimmten Betriebszeit eine Regeneration der Aktivkohle erforderlich ist.

Neben dem Aktivkohle-Adsorber 5a im Adsorptionsbetrieb sind in der Figur zwei weitere Aktivkohle-Adsorber 5b und 5c dargestellt, welche einem Regenerationsbetrieb unterzogen werden. Abweichend von der Darstellung in der Figur befinden sich üblicherweise ein oder mehrere Adsorber 5a im Adsorptionsbetrieb, während sich nur ein Adsorber entweder in einem Desorptionsschritt (Adsorber 5b) oder in einem Trockungs- und Kühlschritt (Adsorber 5c) des Regenerationsbetriebs befindet.

Im Desorptionsschritt wird über eine Leitung 9 Frischdampf aus einer Dampfquelle 10 durch den Adsorber 5b geleitet. Hierdurch wird die Aktivkohle erhitzt und es bildet sich ein Wasserdampf-Lösemittel-Gemisch (Desorbat), welches über eine Leitung 11 einer ersten Kühlstufe mit einem Wärmetauscher 12 (Desorbatwärmetauscher) zugeführt wird.

In dem sich an den Desorptionsschritt anschließenden Trocknungs- und Kühlschritt wird dem Adsorber 5c durch das Gebläse 3 ungereinigtes Abgas zugeleitet. Der durch den Desorptionsschritt erwärmte und mit Wasserdampf beladene Adsorber 5c wird dadurch gekühlt und getrocknet. Über eine Leitung 13 wird das in dem Adsorber 5c erwärmte und befeuchtete Abgas einer zweiten Kühlstufe 14 zugeleitet.

Die zweite Kühlstufe 14 weist einen ersten Ausschleuskühler 15, der bspw. mit Rückkühlwasser betrieben wird, und einen diesem nachgeschalteten, zweiten Ausschleuskühler 16 auf, der mit Kaltwasser betrieben wird. In der zweiten Kühlstufe 14 kondensiert ein Großteil der in dem Abgas enthaltenen Feuchtigkeit und wird einem Abscheider 17 zugeleitet. Das derart getrocknete und gekühlte Abgase wird über eine Leitung 18 vor dem Gebläse 3 mit dem Hauptabgasstrom aus der Abluftansaugung 2 gemischt und durch den oder die Adsorber 5a im Adsorptionsbetrieb geleitet.

Das in der ersten Kühlstufe 12 (Desorbatwärmetauscher) abgekühlte Desorbat wird einem Kondensator 19 und einem Nachkühler 20 zugeleitet, welcher ebenfalls mit dem Abscheider 17 verbunden ist. In dem Abscheider 17 wird Lösemittel in der flüssigen Phase abgeschieden und kann über eine Leitung 21 abgelassen werden. Das Wasserdampfkondensat wird aus dem Abscheider 17 einem Stripper 22 zur weiteren Reinigung zugeleitet. Der Kondensator 19 und der Nachkühler 20 sind über eine Atmungsleitung 23 mit der Saugseite des Gebläses 3 verbunden.

Der Desorbatwärmetauscher 12 ist über einen ersten Kreislauf 24 mit einem Pufferbehälter 25 verbunden, welchem diskontinuierlich, d.h. immer wenn ein Aktivkohle-Adsorber 5b im Desorptionsschritt regeneriert wird, ein Heiz- oder Kühlmedium zugeleitet wird.

In dem Pufferbehälter 25 wird die Wärmeenergie gespeichert und kontinuierlich über einen zweiten Kreislauf 26, ggf. mittels einer Pumpe 27, einem Temperaturgleichrichter 28 zugeführt. Dieser Temperaturgleichrichter 28 ist ein Wärmetauscher, in welchem über eine Leitung 29 Frischdampf aus der Dampfquelle 10 eingebracht wird, so dass das in dem zweiten Kreislauf 26 zirkulierende Heizoder Kühlmedium, bspw. Wasser, kontinuierlich auf ein gleichbleibendes Temperaturniveau von bspw. etwa 95 °C angehoben wird. Nach dem Temperaturgleichrichter 28 wird dieses Heiz- oder Kühlmedium durch einen Kaltwassererzeuger 30 geleitet, welcher als Kältemaschine mittels der Wärmeenergie des in dem zweiten Kreislauf 26 zirkulierenden Heiz- oder Kühlmediums in einem Kaltwasserkreislauf 31 ein Kühlmedium, wie bspw. Wasser, abkühlt.

Aus dem Kaltwassererzeuger wird das um etwa 10 °C auf bspw. 85 °C abgekühlte Heiz- oder Kühlmedium in dem zweiten Kreislauf 26 durch einen Wärmetauscher 32 zurück in den Pufferbehälter 25 geleitet. Der Wärmetauscher 32 dient dabei der Abwärmenutzung der in dem Heiz- oder Kühlmedium enthaltenen Wärmeenergie. Diese Wärmeenergie kann bspw. zum Heizen von Räumen, Gebäuden oder dgl. genutzt werden.

Der Kaltwassererzeuger 30 ist über den Kreislauf 31 mit dem zweiten Ausschleuskühler 16 der zweiten Kühlstufe 14 verbunden. Das in dem Kaltwassererzeuger 30 bspw. von 12 °C auf etwa 6 °C abgekühlte Wasser wird somit unmittelbar für die Kühlung des Abgases eines Adsorbers 5c im Trocknungs- und Kühlschritt eingesetzt. Auf diese Weise lässt sich die im Desorbat enthaltene Wärme besonders wirtschaftlich nutzen. Gleichzeitig wird den Adsorbern im Regenerationsbetrieb nach dem Desorptionsschritt in dem Trocknungs- und Kühlschritt Feuchtigkeit entzogen und die Adsorber werden abgekühlt. Es ist daher nicht erforderlich, die zur Trocknung bzw. Kühlung eingesetzten Abgase bspw. über den Kamin 7 in die Umgebung abzulassen, sondern diese können nach einer Reinigung in einem Adsorber 5a im Adsorptionsbetrieb gereinigt in die Einhausung einer Druckmaschiene oder dgl. zurückgeleitet werden.

### Bezugszeichen

- 1: Abgasreinigungsanlage
- 2: Abluftansaugung
- 3: Gebläse
- 4: Kühler
- 5a - 5c: Aktivkohle-Adsorber
- 6: Leitung
- 7: Kamin
- 8: Leitung
- 9: Leitung
- 10: Dampfquelle
- 11: Leitung
- 12: erste Kühlstufe (Desorbatwärmetauscher)
- 13: Leitung
- 14: zweite Kühlstufe
- 15: erster Ausschleuskühler
- 16: zweiter Ausschleuskühler
- 17: Abscheider
- 18: Leitung
- 19: Kondensator
- 20: Nachkühler
- 21: Leitung
- 22: Stripper
- 23: Leitung
- 24: erster Kreislauf
- 25: Pufferbehälter
- 26: zweiter Kreislauf
- 27: Pumpe
- 28: Temperaturgleichrichter
- 29: Leitung
- 30: Kaltwassererzeugung
- 31: Kaltwasserkreislauf
- 32: Wärmetauscher

## Patentansprüche

1. Verfahren zur Reinigung von Abgasen, insbesondere zur Reinigung von Abluft aus Druckereianlagen, die aus einem mit den Abgasen belasteten Bereich abgezogen und zur Abtrennung von Verunreinigungen aus dem Gas wenigstens zwei Adsorbern (5a, 5b, 5c) zugeführt werden, die derart zyklisch abwechselnd einem Regenerationsbetrieb unterzogen werden, dass sich wenigstens einer der Adsorber (5a) in einem Adsorptionsbetrieb befindet, wenn sich wenigstens ein weiterer Adsorber (5b, 5c) in einem Regenerationsbetrieb befindet,
wobei die Adsorber (5a) im Adsorptionsbetrieb mit Abgas beaufschlagt werden, welches nach der Reinigung in den Adsorbern (5a) in die Umgebung abgelassen und/oder in den mit Abgasen belasteten Bereich zurückgeführt wird,
und die Adsorber (5b, 5c) im Regenerationsbetrieb zunächst in einem Desorptionsschritt, in welchem der wenigstens eine Adsorber (5b) von dem Abgasstrom getrennt ist, mit einem Austreibmittel beaufschlagt werden, welches über eine dem Adsorber (5b) nachgeschaltete Kühlstufe (12) abgeführt wird,
und wobei die Adsorber (5b, 5c) im Regenerationsbetrieb in einem sich an den Desorptionsschritt anschließenden Trocknungs- und Kühlschritt mit Abgas beaufschlagt werden, welches in einer dem wenigstens einen Adsorber (5c) nachgeschalteten Kühlstufe (14) gekühlt und anschließend dem wenigstens einen Adsorber (5a) im Adsorptionsbetrieb zugeführt wird,
**dadurch gekennzeichnet, dass** im Desorptionsschritt das Austreibmittel einer dem Adsorber (5b) nachgeschalteten ersten Kühlstufe (12) und im Trocknungsund Kühlschritt das Abgas einer zweiten Kühlstufe (14) zugeführt wird.

2. Verfahren nach Anspruch 1, **dadurch gekennzeichnet, dass** sich immer ein oder mehrere Adsorber (5a) im Adsorptionsbetrieb befinden, während sich maximal ein weiterer Adsorber (5b oder 5c) im Desorptionsschritt oder im Trocknungs- und Kühlschritt des Regenerationsbetriebs befindet.

3. Verfahren nach einem der Ansprüche 1 oder 2, **dadurch gekennzeichnet, dass** das Abgas in der zweiten Kühlstufe (14) in einem ersten Ausschleuskühler (15) auf unter 50 °C, insbesondere etwa 40 °C und in einem zweiten Ausschleuskühler (16) auf unter 25 °C, insbesondere etwa 15 °C abgekühlt wird.

4. Verfahren nach einem der vorhergehenden Ansprüche, **dadurch gekennzeichnet, dass** dem Austreibmittel die Desorbatwärme in der ersten Kühlstufe (12) in einem Desorbatwärmetauscher (12) durch ein Heiz- oder Kühlmedium entzogen und zur Kaltwassererzeugung genutzt wird.

5. Verfahren nach Anspruch 4, **dadurch gekennzeichnet, dass** das Heizoder Kühlmedium vor der Nutzung der Desorbatwärme in einem Temperaturgleichrichter (28) auf ein im Wesentlichen konstantes Temperaturniveau zwischen 85 °C und 110 °C gebracht und die Wärmeenergie des Heiz- oder Kühlmediums in einer dem Temperaturgleichrichter (28) nachgeschalteten Kaltwassererzeugungsanlage (30) zur Kühlung eines Kühlmediums eingesetzt wird.

6. Verfahren nach Anspruch 5, **dadurch gekennzeichnet, dass** das Kühlmedium zur Kühlung des Abgases in der zweiten Kühlstufe (14) eingesetzt wird.

7. Verfahren nach einem der Ansprüche 5 oder 6, **dadurch gekennzeichnet, dass** zwischen dem Wärmetauscher (12) der ersten Kühlstufe (12) und der Kaltwassererzeugungsanlage (30) ein Puffersystem (25) zur Speicherung von Wärme zwischengeschaltet ist.

8. Verfahren nach einem der Ansprüche 5 bis 7, **dadurch gekennzeichnet, dass** das Kühlmedium in der Kaltwassererzeugungsanlage (30) auf eine Temperatur von unter 15 °C, insbesondere auf etwa 4 bis 7 °C abgekühlt wird.

9. Verfahren nach einem der vorhergehenden Ansprüche, **dadurch gekennzeichnet, dass** das gereinigte Abgas im Wesentlichen vollständig in den Bereich zurückgeführt wird, aus welchem das Abgas vor der Reinigung abgesaugt wird.

10. Verfahren nach einem der vorhergehenden Ansprüche, **dadurch gekennzeichnet, dass** das Abgas vor der Reinigung in einem Adsorber (5a, 5b, 5c) in einer weiteren Kühlstufe (4) gekühlt wird.

11. Anlage zur Reinigung von Abgasen, insbesondere zur Durchführung eines Verfahrens nach einem der vorhergehenden Ansprüche, mit einem Leitungssystem (2, 6, 8, 11, 18, 23), welches einen Bereich, in dem Abgase anfallen, mit wenigstens zwei parallel geschalteten Adsorbern (5a, 5b, 5c), insbesondere Aktivkohle-Adsorbern, und diese wieder mit dem genannten Bereich verbindet, einer Einrichtung (9, 10) zur abwechselnden Zufuhr eines Austreibmittels zu den Adsorbern (5a, 5b, 5c) und mit einer den Adsorbern (5a, 5b, 5c) nachgeschalteten ersten Kühlstufe (12), **dadurch gekennzeichnet, dass** den Adsorbern (5a, 5b, 5c) eine zweite Kühlstufe (14) nachgeschaltet ist, welche mit dem Leitungssystem verbindbar ist.

12. Anlage nach Anspruch 11, **dadurch gekennzeichnet, dass** die erste Kühlstufe (12) einen Desorbatwärmetauscher (12) aufweist, der über einen ersten Kreislauf (24) eines ersten Heiz- oder Kühlmediums mit einem Pufferbehälter (25) verbunden ist, aus welchem über einen zweiten Kreislauf (26) mittels eines zweiten Heiz- oder Kühlmediums Wärmeenergie zur Nutzung abgeführt wird.

13. Anlage nach Anspruch 12, **dadurch gekennzeichnet, dass** in dem zweiten Kreislauf (26) ein Temperaturgleichrichter (28) und diesem nachgeschaltet eine Kaltwassererzeugungsanlage (30) vorgesehen sind, welche in Strömungsrichtung vor einem Wärmetauscher (32) oder dgl. zur weiteren Nutzung der Wärmeenergie in dem zweiten Kreislauf (26) angeordnet sind.

14. Anlage nach einem der Ansprüche 11 bis 13, **dadurch gekennzeichnet, dass** die zweite Kühlstufe (14) zwei in Reihe geschaltete Ausschleuskühler (15, 16) aufweist.

15. Anlage nach einem der Ansprüche 13 oder 14, **dadurch gekennzeichnet, dass** die Kaltwassererzeugungsanlage (30) über einen Kühlmittelkreislauf (31 ) mit der zweiten Kühlstufe (14) verbunden ist.

16. Anlage nach einem der Ansprüche 11 bis 15, **dadurch gekennzeichnet, dass** sie als Abluftfilteranlage einer Druckerei nachgeschaltet ist.
